# EUROPEAN PATENT SPECIFICATION

(11) **EP 4 461 545 B1**
(45) Date of publication and mention of the grant of the patent: **25.11.2026**
(21) Application number: 23200462.2
(22) Date of filing: 28.09.2023
(51) Int. Cl.: B41J 3/407, A63H 9/00, B33Y 40/20

(54) **TOY FIXTURE AND PRINTING SYSTEM**
SPIELZEUGHALTERUNG UND DRUCKSYSTEM
DISPOSITIF DE FIXATION DE JOUET ET SYSTÈME D'IMPRESSION

(30) Priority: 30.09.2022 US 202263412124 P; 13.12.2022 US 202263432256 P
(43) Date of publication of application: 13.11.2024
(73) Proprietor: Hasbro, Inc., Pawtucket, RI 02862 (US)
(72) Inventor: Belknap, Jr., William Howard Lyon, Mansfield, MA 02048 (US); Mackowiak, Robert Chester, Oakland, RI, 02858 (US); Marr, Patrick, Franklin, MA 02038 (US); D'Amico, Daniel Anthony, Uxbridge, MA 01569 (US); Nelson, Tyler, Cranston, RI 02905 (US)
(74) Representative: Hoffmann Eitle

(56) References cited:
- WO-A1-2021/096904
- JP-A- 2006 035 562
- JP-A- 2014 097 217
- JP-A- 2019 142 020
- US-A1- 2013 333 579

## Description

### TECHNICAL FIELD

This disclosure relates to a toy fixture for holding a three-dimensional body, a method of designing a three-dimensional body, a method of designing a plurality of uniquely-shaped three-dimensional bodies, and a method.

### BACKGROUND

Dolls and action figures can be customized to resemble particular people. Technology including scanners and three-dimensional printers can be used for customized heads and bodies. Facial features can be printed onto the head by using ink jets.

Further related prior art may be found JP 2019 142020 A which relates to doll making system. In JP 2006 035562 A holding device for a printing object is disclosed.

### SUMMARY

The present invention is defined by the independent claims 1, 6, 8, and 12. The dependent claims describe optional features and preferred embodiments.

According to a first aspect, a fixture includes: a fixture block defining a printing opening positioned between two opposing walls; and a plurality of plate guides defined in the walls. Each plate guide is defined in a different portion of the fixture block. Each plate guide in the fixture defines a registration location, and, when a plate of a unitary object is fixed to a plate guide, a registration region of a three-dimensional body fixed to the plate is aligned with the registration location of that plate guide.

Implementations can include one or more of the following features. For example, the registration region or area of the three-dimensional body that is fixed to the plate can depend on which plate guide the plate is fixed to. Each plate guide can include a slot defined in each of the two opposing walls. Each opposing wall can include a biasing device configured to fix the plate within the slot of that opposing wall. The fixture can be configured to receive unitary objects formed with different shapes, different geometries, and different dimensions.

According to a second aspect, a method is performed for designing a three-dimensional body. The method includes: forming a unitary object including the three-dimensional body fixed to a plate by a connection mechanism; fixing the plate to a plate guide defined in a fixture block such that a target region of the three-dimensional body is positioned in a printing opening of the fixture block and a registration region of the three-dimensional body is aligned with a registration location within the printing opening that is defined by the plate guide; detecting a unique identification code of the unitary object; printing a unique topographical design on the target region of the three-dimensional body positioned in the printing opening of the fixture block, the unique topographical design associated with the detected unique identification code; and, when the printing is completed, removing the three-dimensional body from the plate by disconnecting the connection mechanism from the three-dimensional body.

Implementations can include one or more of the following features. For example, the connection mechanism can be disconnected from the three-dimensional body by disconnecting a plurality of posts from the three-dimensional body.

According to a third aspect, a method is performed for designing a plurality of uniquely-shaped three-dimensional bodies. The method includes: forming a plurality of unitary objects, each unitary object including one of the uniquely-shaped three-dimensional bodies fixed to a plate by a connection mechanism and each unitary object associated with a unique identification code; fixing each unitary object to a respective fixture including fixing the plate of the unitary object to a plate guide defined in the fixture such that a target region of the three-dimensional body is positioned in a printing opening of the fixture and a registration region of the three-dimensional body is aligned with a registration location within the printing opening that is defined by the plate guide; arranging the fixtures on a base; detecting the identification code of each unitary object; and printing a unique topographical design on the target region of each three-dimensional body positioned in the printing opening of its respective fixture, the unique topographical design associated with the detected unique identification code of the unitary object that includes that three-dimensional body.

Implementations can include one or more of the following features. For example, the method can further include, when the printing of the unique topographical design for each three-dimensional body arranged in the fixtures on the base is completed, removing each three-dimensional body from its respective plate by disconnecting the connection mechanism from the three-dimensional body. The identification code of each unitary object can be detected or read by scanning a visual code on the plate of the unitary object or scanning a visual code on the base. The fixtures can be arranged on the base by arranging the fixtures such that the registration locations in the printing openings of the fixture blocks are at the same location relative to an ink dispenser that prints the unique topographical designs.

According to a fourth aspect, a method includes: producing a plurality of unitary objects, each unitary object including a three-dimensional body that is fixed to a plate by a connection mechanism, at least two of the unitary objects having distinctly-shaped three-dimensional bodies and associated connection mechanisms that are shaped based on the distinct shapes of the respective three-dimensional bodies; fixing the unitary objects to respective identical fixtures and arranging the fixtures on a base; and printing a topographical design on a target region of each three-dimensional body fixed within the fixture arranged on the base. Each registration location for topographical printing on each of the three-dimensional bodies is positioned in the same two-dimensional printing plane when the fixtures are arranged on the base.

Implementations can include one or more of the following features. For example, the plurality of unitary objects can be produced by forming the entire unitary object including the three-dimensional body, the connection mechanism, and the plate using an additive manufacturing process. Forming each unitary object can be based on a scan of a person's face using a mobile device. The connection mechanism can be defined by one or more dimensions that are different based on the distinctly-shaped three-dimensional body to which the connection mechanism is fixed. The plurality of unitary objects can be formed by forming the at least two distinctly-shaped unitary objects by forming the respective distinctly-shaped three-dimensional bodies with different scales and/or different geometries.

### DESCRIPTION OF DRAWINGS

Fig. 1A is a schematic block diagram of a printing system including a plurality of unitary objects each associated with a unique identification code and each fixed in a fixture, with all the fixtures arranged on a base, and a printer controller configured to read or detect each identification code and instruct an ink dispenser to print a unique topographical design on each unitary object;
Fig. 1B is a schematic block diagram showing details of a unitary object fixed to a fixture, the unitary object including a three-dimensional body connected to a plate by way of a connection mechanism and the plate being fixed to the fixture;
Fig. 1C is a schematic block diagram of the unitary object of Fig. 1B after the ink dispenser of Fig. 1A has printed a unique topographical design on the three-dimensional body of the unitary object;
Fig. 1D is a schematic block diagram of the unitary object of Fig. 1C removed from its fixture;
Fig. 1E is a schematic block diagram of the separation of the three-dimensional body from the plate and connection mechanism of the unitary object of Fig. 1D;
Fig. 2 is a schematic diagram of an implementation of the three-dimensional body of Fig. 1E configured as a head and being attached to a torso of a toy figure and a wig;
Fig. 3A is a perspective view of an implementation of a unitary object of Figs. 1A-2 in which the three-dimensional body is shaped like a head;
Fig. 3B is a perspective view of the unitary object of Fig. 3A and rotated about the local Xu axis;
Fig. 3C is a plan view of the unitary object of Fig. 3A and rotated about the local Xu axis;
Fig. 3D is a perspective view of the unitary object of Fig. 3A with an inset view showing details of the connection mechanism;
Fig. 4A is a side cross-sectional view showing detail of the connection mechanism between the three-dimensional body and the plate;
Fig. 4B is a side cross-sectional view of the connection mechanism, three-dimensional body, and plate of Fig. 4A, in which the three-dimensional body has been removed from the connection mechanism;
Fig. 5A is a plan view of an implementation of the fixture of Figs. 1A-1C looking down through a printing opening;
Fig. 5B is a cross-sectional view of the fixture of Fig. 5A taken along plane 5A-5A;
Fig. 5C is the cross-sectional view of the fixture of Fig. 5B showing the angles of plate guides in walls of the fixture;
Fig. 6A is a side view of the unitary object of Figs. 3A-3D inserted into the fixture of Figs. 5A and 5B using a first plate guide such that a front target region of a face region of the three-dimensional body of the unitary object is aligned within a printing opening of the fixture block when the plate of the unitary object is affixed to (such as fixed to or within) the first plate guide;
Fig. 6B is a plan view of the unitary object fixed within the fixture of Fig. 6A looking down through a printing opening;
Fig. 7A is a side view of the unitary object of Figs. 3A-3D inserted into the fixture of Figs. 5A and 5B using a second plate guide distinct from the first plate guide of Fig. 6A such that a first side target region of the face region of the three-dimensional body of the unitary object is aligned within the printing opening of the fixture block when the plate of the unitary object is affixed to (such as fixed to or within) the second plate guide;
Fig. 7B is a side view of the unitary object of Figs. 3A-3D inserted into the fixture of Figs. 5A and 5B using the second plate guide such that a second side target region of the face region of the three-dimensional body of the unitary object is aligned within the printing opening of the fixture block when the plate of the unitary object is affixed to (such as fixed to or within) the second plate guide;
Fig. 8A is a schematic diagram of a procedure performed by the printing system of Fig. 1A for designing a plurality of three-dimensional bodies such as the three-dimensional bodies of Figs. 1A-8B;
Fig. 8B is a schematic diagram of steps of the procedure of Fig. 8A performed by the printing system of Fig. 1A for designing a plurality of three-dimensional bodies such as the three-dimensional bodies of Figs. 1A-7B, and showing topographical printed designs on the three-dimensional bodies;
Fig. 8C is a schematic diagram of steps of the procedure of Fig. 8A in which the three-dimensional bodies (heads) have been disconnected from the respective connection mechanism and plate; and
Fig. 9 is a view along the X axis of the printing system of Fig. 1A and Fig. 8A showing the arrangement of the three-dimensional bodies and their reference areas overlapping in the XY plane.

### DETAILED DESCRIPTION

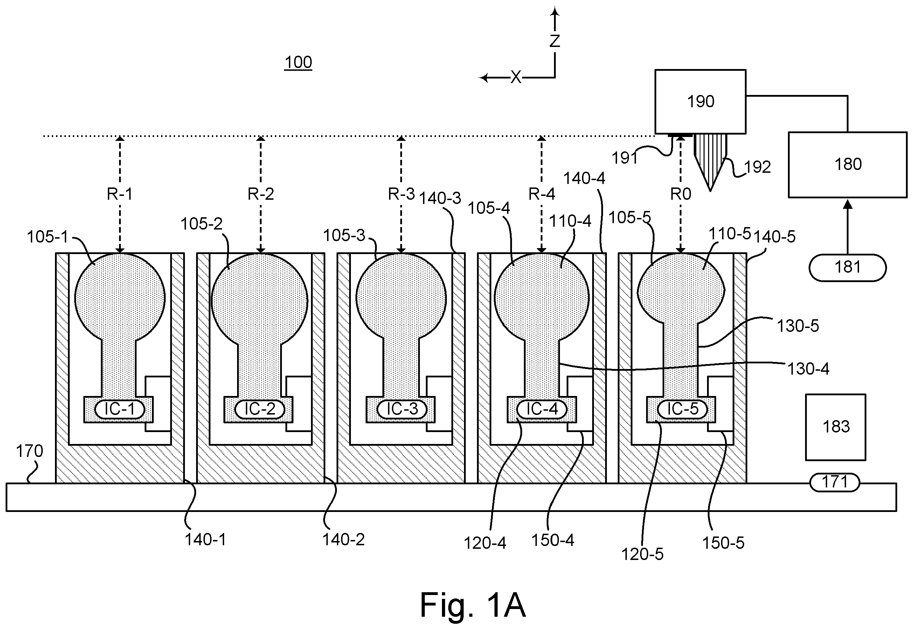

Referring to Fig. 1A, a printing system 100 is shown. The printing system 100 includes, among other features, a plurality of unitary objects 105-i, a plurality of fixtures 140-i arranged on a base 170, and a printer controller 180 in communication with an ink-dispenser 190, where i corresponds to a set of integers [1, 2, ... I] and I is a number greater than 1. In the implementation of Fig. 1A, there are five fixtures 140-1, 140-2, 140-3, 140-4, 140-5 and five unitary objects 105-1, 105-2, 105-3, 105-4, 105-5. The printing system 100 can include fewer than or more than five fixtures and five unitary objects. In general, all of the fixtures 140-i can be identical while the unitary objects 105-i can have different and unique portions.

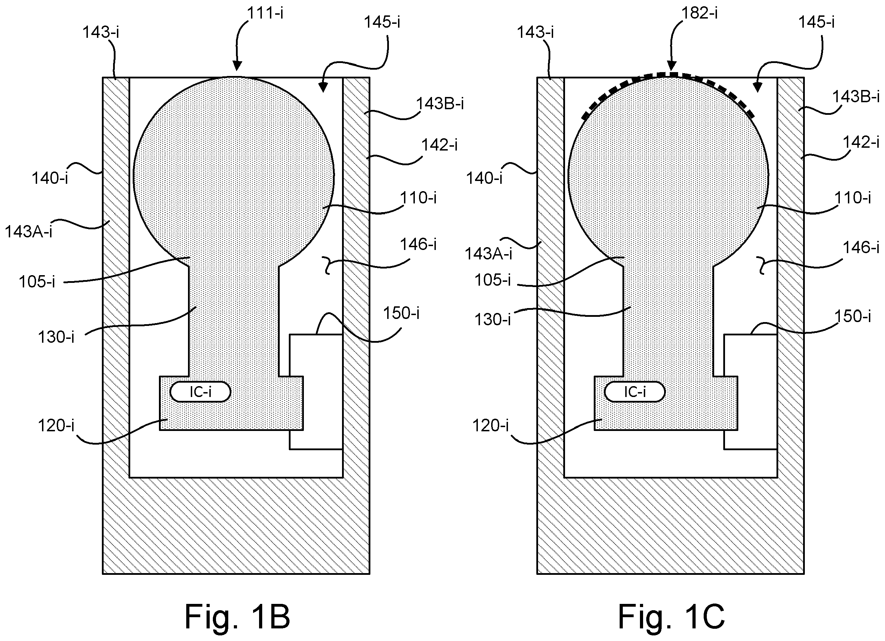

As also shown in greater detail in Fig. 1B, each unitary object 105-i is defined by and is associated with a unique identification code IC-i. The unique identification code IC-i can be any unique combination of numbers, letters, alphanumeric characters, characters, symbols, or matrix barcodes. As discussed below, the unique identification code IC-i can be created as a part of a recipe when the design for a toy that includes a three-dimensional body 110-i is initially created. Such a recipe can include information about the scale and/or geometry of the body 110-i, information about another component or accessories that attach to the three-dimensional body 110-i after the body 110-i is disconnected from its connection mechanism 130-i. The unique identification code IC-i can be a visible code located on the exterior of a plate 120-i of the unitary object 105-i.

Each unitary object 105-i includes a uniquely-shaped three-dimensional body 110-i fixed to a plate 120-i by a connection mechanism 130-i. The object 105-i is unitary in that the combination of the three-dimensional body 110-i, the plate 120-i, and the connection mechanism 130-i are undivided. They can be formed all together using a single process such as by molding or by additive manufacturing. Nevertheless, as discussed below, the three-dimensional body 110-i is able to be disconnected from the connection mechanism 130-i. The unitary object 105-i can be made of any suitable solid material such as, for example, a resin or a polymer.

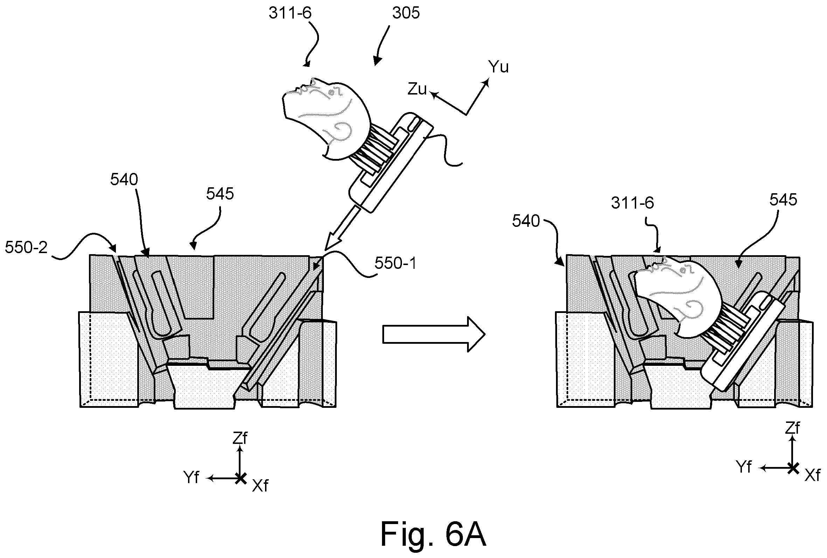

Each fixture 140-i includes a fixture block 142-i that defines a printing opening 145-i. Each fixture 140-i includes a plate guide 150-i defined in the fixture block 142-i. The plate guide 150-i is configured to receive the plate 120-i of the unitary object 105-i so as to fix the unitary object 105-i to or within the fixture 140-i. A target region 111-i of the body 110-i is aligned within the printing opening 145-i of the fixture block 142-i when the plate 120-i is affixed to (such as fixed to or within) the plate guide 150-i. The target region 111-i of the body 110-i is aligned within the printing opening 145-i if it is generally in the vicinity of an edge 143-i of the fixture block 142-i facing the ink dispenser 190. This alignment enables the target region 111-i to be accurately decorated with ink from the ink dispenser 190, as discussed below. While a single target region 111-i of the body 110-i is shown in Figs. 1A-1C, it is possible for the body 110-i to include a plurality of target regions 111-i. Such implementations are discussed below with reference to Figs. 6A-8B.

The printer controller 180 is configured to detect the unique identification code IC-i of each unitary object 105-i. In particular, the printer controller 180 is configured to receive the data 181 that includes all of the identification codes IC-i from each of the unitary objects 105-i. The printer controller 180 is also configured to control the ink dispenser 190 to print a unique topographical design 182-i (Fig. 1C, which shows the unitary object 105-i after it has been printed) on the aligned target region 111-i of each three-dimensional body 110-i of each unitary object 105-i. The unique topographical design 182-i is associated with the detected unique identification code IC-i. Thus, the topographical design 182-1 applied to the target region 111-1 of the three-dimensional body 110-1 is different or distinct from the topographical design 182-2 applied to the target region 111-2 of the three-dimensional body 110-2. The topographical design 182-i is selected to correspond to the design appropriate for the three-dimensional body 110-i and this correspondence is determined from the detected unique identification code IC-i of that three-dimensional body 110-i. The topographical design 182-i can be based on a two-dimensional print design that is stored within memory and accessible by the printer controller 180.

The ink dispenser 190 and the base 170 are in a controllable and adjustable position relative to each other; for example, the ink dispenser 190 can move along the X and/or Y direction relative to the base 170. The base 170 can move along the Z direction. Generally, the position of the base 170 can be adjusted and fixed prior to the ink dispenser 190 executing a print instruction. The ink dispenser 190 is configured to apply ink or paint 192 to each target region 111-i of each three-dimensional body 110-i in accordance with the topographical printing design 182-i associated with that body 110-i. The topographical design 182-i corresponds to the ink that is dispensed from the ink dispenser 190, and therefore the topographical design 182-i conforms to the three-dimensional contours of the target region 111-i of the body 110-i. The topographical design 182-i can be made up of different topographical design elements such as, in the example in which the body 110-i is a head and the target region 111-i is a face, an element for eyebrows, an element for lips, and an element for eyes.

The unitary object 105-i is mounted to the fixture 140-i by way of the plate 120-i being fixed to the plate guide 150-i. There is no connection between the associated three-dimensional body 110-i and the fixture 140-i. The unitary object 105-i is inserted into a cavity 146-i of the fixture block 142-i by way of the printing opening 145-i. In order to fix the unitary object 105-i to the fixture 140-i, the plate 120-i is affixed to the plate guide 150-i. Each fixture block 142-i can include two opposing walls 143A-i and 143B-i. The plate guide 150-i can be associated with or a part of one or more of the opposing walls 143A-i and 143B-i. Because the fixtures 140-i are identical in design, the plate guides 150-i are all positioned at the same location along a Z axis when the fixtures 140-i are fixed to the base 170. Accordingly, the plates 120-i are also positioned at the same location along the Z axis when the unitary objects 105-i are mounted to the fixtures 140-i and the fixtures 140-i are fixed to the base 170.

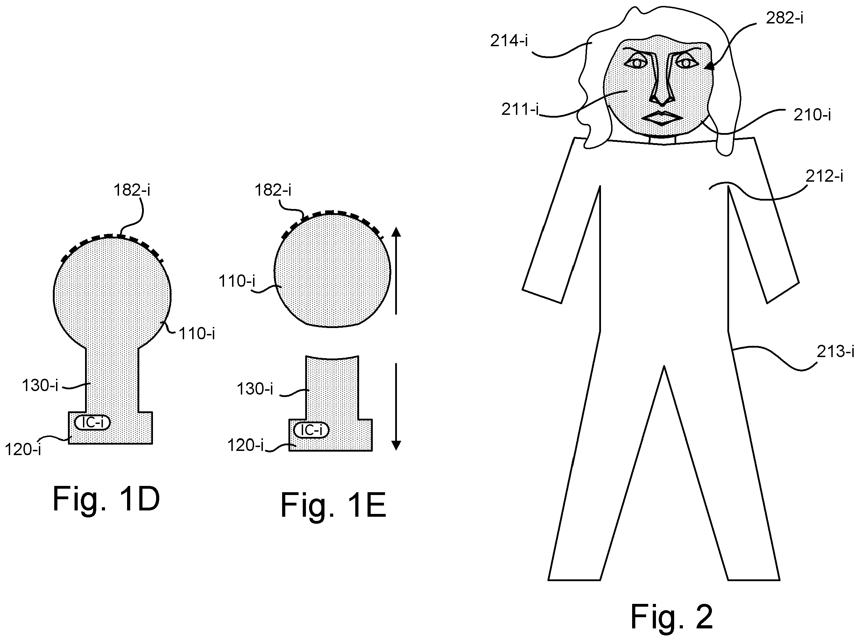

As discussed in greater detail below, and as shown in Figs. 1D-1E, once the unique topographical design 182-i is applied to the target region 111-i of the three-dimensional body 110-i (that is, the printing steps performed by the ink dispenser 190 are completed), the unitary object 105-i is removed from the cavity 146-i (by way of the printing opening 145-i) of the fixture 140-i, as shown in Fig. 1D. The plate 120-i and the three-dimensional body 110-i are separated from each other by, for example, disconnecting the connection mechanism 130-i from the three-dimensional body 110-i, as shown in Fig. 1E. Up to this point, the unique identification code IC-i has remained fixed to the three-dimensional body 110-i so that it is possible to identify the design of the three-dimensional body 110-i. An implementation 210-i of the three-dimensional body 110-i that has been disconnected from its associated connection mechanism 130-i is shown in Fig. 2. In this implementation, the body 210-i is a three-dimensional head, the target region 211-i includes the three-dimensional facial features such as the contours of the nose, lips, eyes, brows, cheeks, and the unique topographical design 282-i includes two-dimensional and topographically-printed facial features such as the colors and patterns of the eyes, cheeks, brows, lips, beard (if one is present), mustache (if one is present), or scars (if present). Other external features can be added to or connected to the three-dimensional head 210-i post ink processing by the ink dispenser 190. With reference to the example of Fig. 2, the head 210-i is attached to a torso 212-i of a toy figure 213-i. Additionally, a wig 214-i is attached or fixed to a scalp area of the head 210-i.

As discussed above, the printer controller 180 is configured to control the ink dispenser 190 to print the unique topographical design 182-i on each aligned target region 111-i of each three-dimensional body 110-i. The ink dispenser 190 generally moves in a plane that is perpendicular to the Z axis. For example, the ink dispenser 190 moves along a direction parallel with an X axis as it moves from one target region 111-i to the next target region 111-i to be printed. In order for the ink dispenser 190 to print the topographical design 182-i accurately to the aligned target region 111-i of each body 110-i, the printer controller 180 registers a distance between the ink dispenser 190 and a primary registration location R0 in one of the printing openings 145-i. In the example of Fig. 1A, the primary registration location R0 is established between a marker 191 and a feature on the aligned target region 111-5 of the body 110-5. Additionally, as discussed above, each target region 111-i of each body 110-i is aligned within the printing opening 145-i of the fixture block 142-i when the plate 120-i is affixed to (such as fixed to or within) the plate guide 150-i. Moreover, each target region 111-i of each body 110-i is aligned such that a localized registration location R-i is the same for all of the target regions 111-i held in the respective fixtures 140-i on the base 170. The primary registration location R0 and the localized registration locations R-i are measured along the Z axis that is defined as the axis between the target region 111-i and the marker 191 associated with the ink dispenser 190 when the marker 191 is placed directly above the target region 111-i. In this way, because the value of R0 is the same as the values of each R-i, the printer controller 180 only needs to register the primary registration location R0 (the distance between the ink dispenser 190 and the marker 191) before instructing the ink dispenser 190 to print the unique topographical design 182-i on each aligned target region 111-i. This alignment enables each of the target regions 111-i to be accurately decorated with ink from the ink dispenser 190 even though the printer controller 180 registers a single primary registration location R0.

As discussed, each target region 111-i of each body 110-i is aligned within the printing opening 145-i of the fixture block 142-i when the plate 120-i is affixed to (such as fixed to or within) the plate guide 150-i and each target region 111-i of each body 110-i is aligned such that the localized registration location R-i is the same for all of the target regions 111-i held in the respective fixtures 140-i on the base 170. The unitary objects 105-i are designed in a way that enables this uniformity when printing despite that the three-dimensional bodies 110-i have unique scales and/or geometries. Specifically, referring to Fig. 1A, because each body 110-i has a unique scale and/or geometry, physical properties such as scale and geometry of each connection mechanism 130-i are adjusted when each unitary object 105-i is initially formed to account for the differences in the scale and geometry of each body 110-i. As discussed above, the combination of the three-dimensional body 110-i, the plate 120-i, and the connection mechanism 130-i are formed all together using a single process such as by molding or by additive manufacturing. In some implementations, the unitary object 105-i (formed by the combination of the three-dimensional body 110-i, the plate 120-i, and the connection mechanism 130-i) is made of a single material. In other implementations, portions of the unitary object 105-i can be made of distinct materials. Moreover, the plates 120-i are positioned at the same location along the Z axis when the unitary objects 105-i are mounted to the fixtures 140-i and the fixtures 140-i are fixed to the base 170. Accordingly, a distance along the Z direction between each plate 120-i and the registration location on each body 110-i remains constant even though each body 110-i can have a different scale and/or a geometry. For example, as shown in Fig. 1A, the connection mechanism 130-4 has a shorter extent along the Z direction than the connection mechanism 130-5. This is because the body 110-5 has a smaller scale and therefore a smaller extent along the Z direction than the body 110-4. In some implementations, each three-dimensional body 110-5 is defined by a scale percentage that is between a minimum scale percentage of 0% and a maximum scale percentage. The maximum scale percentage can be as high as 10%, 15%, 18%, 20%, or 30% of the minimum scale percentage.

In some implementations, the base 170 includes a base identification code 171. And, the base identification code 171 includes or stores the unique identification codes IC-i of all of the unitary objects 105-i received within each fixture 140-i arranged or fixed to the base 170. For example, the printer controller 180 can be in communication with a metrology unit 183 that is able to detect or read the base identification code 171. And, from this information, the printer controller 180 determines receives the data 181 that includes all of the identification codes IC-i. The base identification code 171 can correspond to a barcode such as a two-dimensional matrix barcode (such as a quick response or QR code).

In other implementations, the metrology unit 183 is configured to directly read or detect each individual identification code IC-i on each plate 120-i without having to detect or read the base identification code 171. For example, the metrology unit 183 can be configured to read or detect each individual identification code IC-i on the plates 120-i when the unitary object 105-i is received in and fixed to the fixture 140-i and the fixture 140-i is fixed or mounted on the base 170. The identification code IC-i can correspond to a barcode such as a two-dimensional matrix barcode (such as a quick response or QR code).

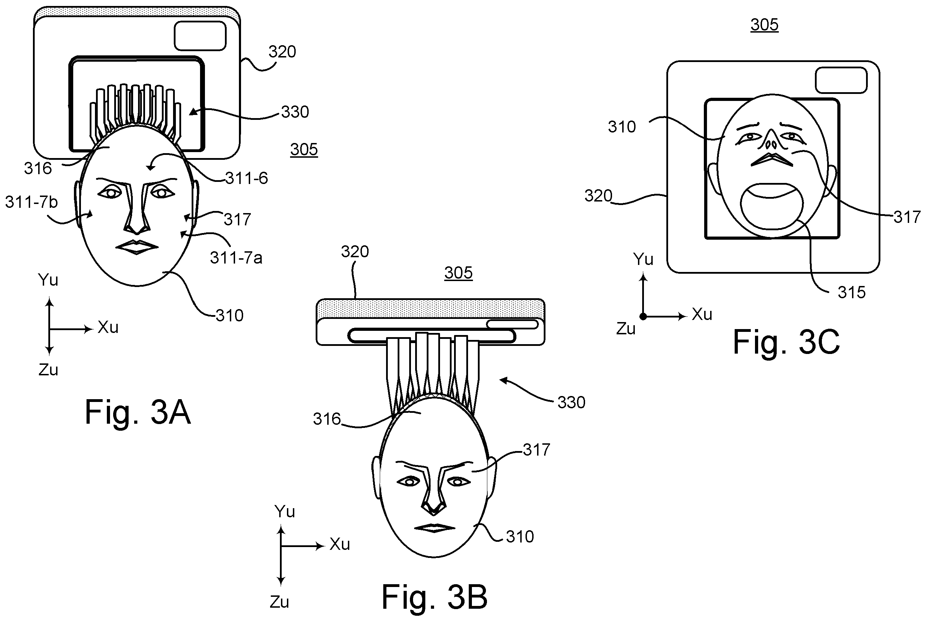

Referring to Figs. 3A-3D, an implementation 305 of a unitary object 105-i is shown in various perspective views. A local XuYuZu coordinate system relative to the unitary object 305 is provided. The local XuYuZu coordinate system may not be aligned with the XYZ coordinate system of the printing system 100 when the unitary object 305 is fixed to the fixture 140-i and the fixture 140-i is fixed to the base 170. Indeed, as shown below, the XuYuZu coordinate system is linearly transposed relative to the XYZ coordinate system.

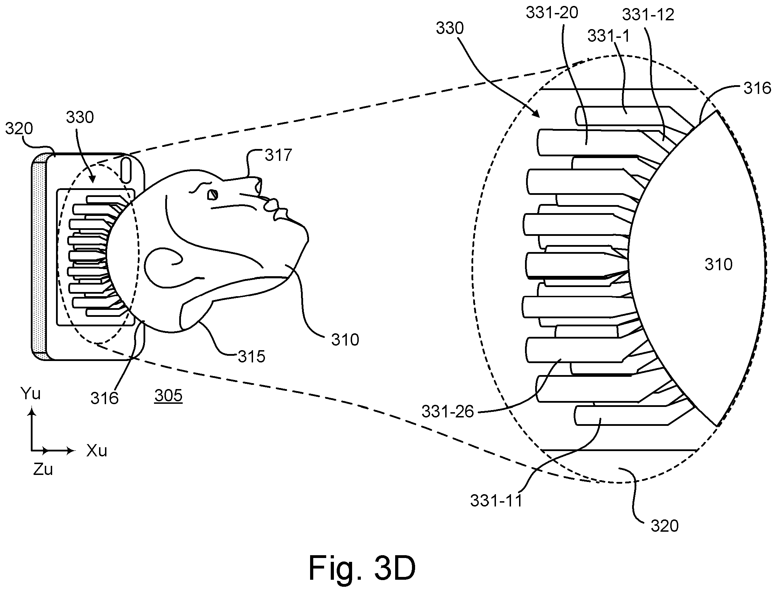

The unitary object 305 includes a three-dimensional body 310 fixed to a plate 320 by a connection mechanism 330. The general design of the unitary object 305 is described with reference to Figs. 3A-3D. Nevertheless, other unitary objects can be designed with the general design of the unitary object 305 but can include three-dimensional bodies 310 and connection mechanisms 330 having different scales and/or geometries, as discussed above with reference to Fig. 1A. In this implementation, the three-dimensional body 310 is a body that resembles or is shaped like a head of a human and the connection mechanism 330 includes a plurality of individual and separated posts 331-k, where k corresponds to a set of integers [1, 2, ... K] and K is a number greater than 1. For simplicity, only posts 331-1, 331-12, 331-20, 331-11, 331-26 are labeled in the inset of Fig. 3D.

Each head 310 includes or is defined by a three-dimensional head base region 315, a three-dimensional scalp region 316, and a three-dimensional face region 317. In this example, the face region 317 corresponds to and/or includes one or more target regions 311-i of the head 310 such that when the unitary object 305 is placed into its fixture (such as the fixture 140-i), the face region 317 (or a particular target region 311-i of the face region 317) is aligned with the printing opening 145-i of the fixture block 142-i when the plate 320 is affixed to the plate guide 150-i. For example, as indicated in Fig. 3A, the face region 317 can include a front target region 311-6 (which is a view facing the front of the face region 317) and two side target regions 311-7a, 311-7b (which are views facing the side of the face region 317). This is shown and discussed in more detail below with reference to an implementation 540 of the fixture 140-i.

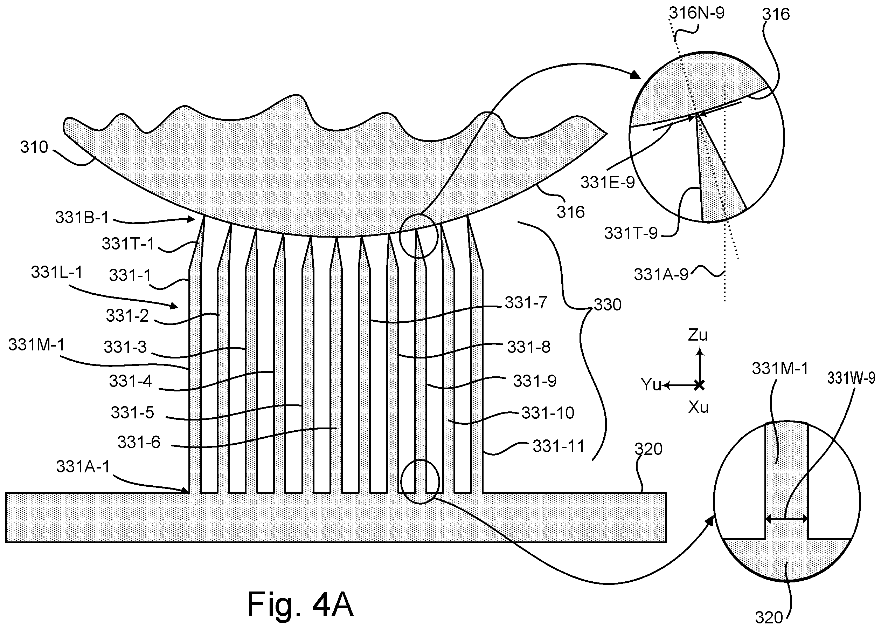

Referring also to Fig. 4A, a close-up and side cross-sectional view of the plurality of posts 330, the head 310, and the plate 320 are shown. For clarity, only one row of the posts 330 are shown, namely posts 331-1, 331-2, ... 331-11 generally arranged along a row that extends along the Yu direction. Other posts are present in planes offset (along the Xu direction) from the plane viewed in Fig. 4A. With reference to the post 331-1, each post 331-1, 331-2, ... 331-11 extends from a first post end 331A-1 axially along the Zu direction to a second post end 331B-1 defining a post length 331L-1. The first post end 331A-1 is fixed and extends from the plate 320 while the second post end 331B-1 is fixed and extends from the body 310, and specifically from the scalp region 316 of the body 310. The post 331-1 is made up of a main post 331M-1 that extends from the first post end 331A-1 to a tapered shape portion 331T-1 along a post axis (which extends parallel with the Zu axis). The main post 331M-1 can have a cylindrical shape (in that the cross-section along the XuYu plane is circular) and the tapered shape portion 331T-1 can be generally conical. Moreover, as shown in the inset and with reference to the post 331-9, each tapered shape portion 331T-9 is angled relative to the post axis 331A-9 (which is parallel with the Zu axis) so that the tip of the tapered shape portion 331T-9 extends from the scalp region 316 at an angle that is parallel with the normal 316N-9 to the surface at the scalp region 316 at which the post 331-9 extends. This design, in which the tips of the tapered shape portion 331T-1 all extend from the scalp region 316 at the angle parallel with the normal 316N to the surface at the scalp region 316, provides additional strength to the connection or link between the head 310 and the connection mechanism 330.

Moreover, the overall length 331L-1 of the post 331-1 and the length of the tapered shape portion 331T-1, taken along the Zu axis, can be different depending on where the post 331-1 is positioned relative to the scalp region 316. In this way, the length 331L-k and the shape of each post 331-k can be adjusted to accommodate the different shapes and scales of the head 310. Each post 331-k can extend between the first post end 331A-1 to the second post end 331B-1 with a respective length 331L-k that can be, for example, a value that is greater than 2 millimeters (mm), such as a value in a range of 2 mm to 15 mm. Additionally, each post 331-k can extend along a direction perpendicular to the Zu axis and the extend along this perpendicular direction can be given by a width 331W-9 as shown in the inset and with reference to the post 331-9. As discussed above with reference to the main post 331M-1, one or more of the posts 331-k can have a cylindrical shape. If one or more of the posts 331-k are formed having a cylindrical shape, the width of each respective post 331-k (such as the width 331W-9 of the post 331-9) represents a respective diameter that can be, for example, a value that is greater than 0.5 millimeters (mm), such as in a range of 1.0 mm to 2.0 mm or about 1.3 mm.

Additionally, due to the design of the tapered shape portion 331T-1 at the second post end 331B-1, the second post end 331B-1 is easily detachable from the location at which it joins with the scalp region 316. Specifically, the second post end 331B-1 has the tapered shape portion 331T-1 that extends from a wider diameter (at the first post end 331A-1) to a tip that extends from the scalp region 316 of the head 310. As shown in the inset of Fig. 4A, the tip can have an extent 331E-9 that is less than a millimeter (mm), for example, a fraction of a millimeter such as, for example, in a range of 0.1 mm to 0.7 mm, in a range of 0.4 mm to 0.6 mm, about 0.5 mm, or even in a range of 0.1 mm to 0.2 mm, or even less.

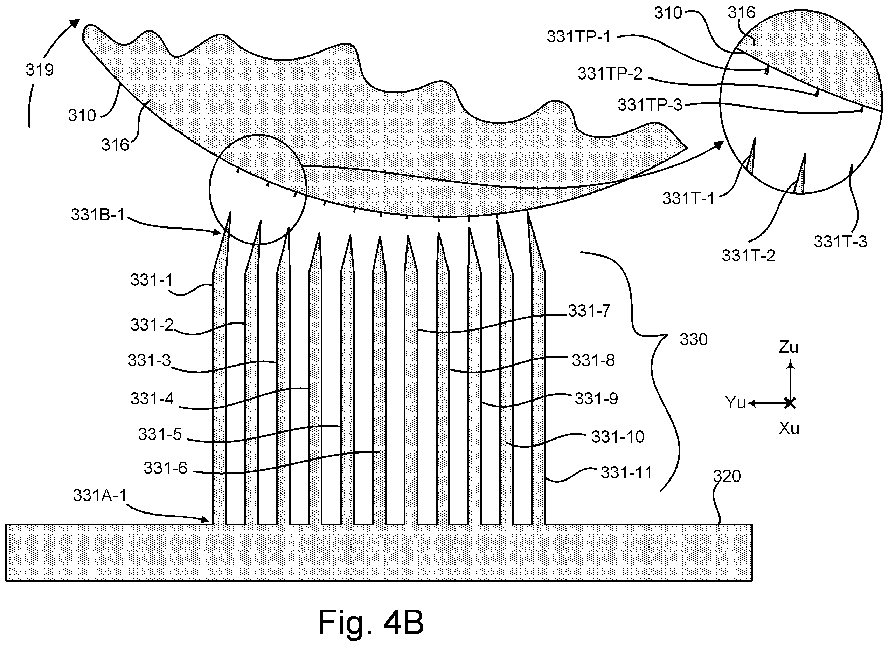

During processing of the target region (such as the target region 311-i of the face region 317) of the unitary object 305 while in the fixture 140-i, the head 310 remains fixed to the connection mechanism 330 and the plate 320 because the connection mechanism 330 includes a plurality of posts 331-k and because the tips of each tapered shape portion 331T-k extend from the scalp region 316 at the angle parallel with the normal 316N to the surface of the scalp region 316. However, once the processing of the target region 311-i (of the face region 317) is completed, as shown in Fig. 4B, the head 310 can be snapped off from the posts 331-k by twisting or turning the head 310 (depicted by the arrow 319) relative to the posts 331-k. The connection is broken at the interface between each second post end 331B-1 and the scalp region 316 of the head 310 because the extent 331E-9 of the tip at the scalp region 316 is so small compared with the size of the scalp region 316 and the width 331W-9 of the main post 331M-1. As one example, the width 331W-9 (or diameter) of the main post 331M-1 is about 1.5 mm, and the extent 331E-is in the range of about 0.45 mm to about 0.5 mm.

In some implementations, the connection mechanism 330 can include between 8 and 50 posts 331-k, and the number of posts 331-k can depend on the size or scale of the head 310. For example, in some implementations there can be between 8-20 posts 331-k.

The overall number of posts 331-k and the geometric arrangement of the posts 331-k can be different depending on whether the head 310 is a "buck" head that would be covered with hair (such as the wig 214-i of Fig. 2) or a bald head that remains exposed after processing. For example, for a buck head 310, the posts 331-k can be geometrically arranged on the plate 320 to match the unique contour of the buck head 310. As another example, for a bald head 310, the posts 331-k can be arranged in a concentric pattern on the plate 320 and the density can be higher than for the buck head 310 (that is, there can be more posts 331-k per unit area of the plate 320 for the bald head 310 than for the buck head 310).

Moreover, in some implementations, as shown in the inset in Fig. 4B, a tip portion 331TP-1, 331TP-2, 331TP-3 of the respective posts 331-1, 331-2, 331-3 can remain on the surface of the scalp region 316 of the head 310 after the connection is broken at the interface between each second post end 331B-1 and the scalp region 316. The tip portion 331TP-1, 331TP-2, 331TP-3 of the respective post 331-1, 331-2, 331-3 that remains after the connection is broken can be removed (for example, by sanding) from the scalp region 316 of the head 310. In this way, the scalp region 316 of the head 310 can be smooth and lack any visible indication such as indentations, of the previous connections points of the posts 331-k on the scalp region 316 of the head 310. This enables, for example, a bald head 310 to have a smooth scalp region 316 after being separated from the plurality of posts 331-k.

In some implementations, the overall length 331L-k of each post 331-k, taken along the Zu axis, for one unitary object 305 can vary depending on where the post 331-k is positioned relative to the scalp region 316. In this way, the length 331L-k and the shape of each post 331-k can be adjusted to accommodate the different shapes and scales of the head 310. For example, the posts 331-k near the center of the head 310 can be shorter than those at the edge of the head 310 (this is shown in Fig. 4A) to accommodate the curved surface of the head 310.

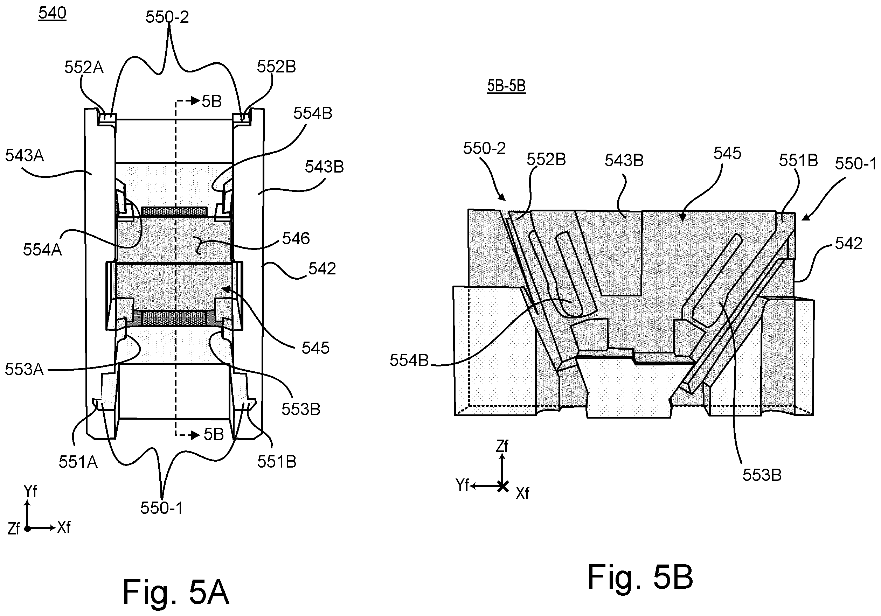

Referring to Figs. 5A and 5B, an implementation 540 of the fixture 140-i is shown. The fixture 540 is configured to receive and fix the plate 320 of the unitary object 305 described with reference to Figs. 3A-4B. The fixture 540 includes a fixture block 542 that defines a printing opening 545. The fixture 540 also includes a cavity 546, and two opposing walls that include a first wall 543A and a second wall 543B.

In Fig. 5A, the fixture 540 is shown from the viewpoint of the printing opening 545 looking down along the +Z direction while in Fig. 5B, the fixture 540 is shown in cross-sectional view 5B-5B. A local XfYfZf coordinate system relative to the fixture 540 is provided. The local XfYfZf coordinate system is aligned with the XYZ coordinate system of the printing system 100 when the fixture 540 is fixed to the base 170.

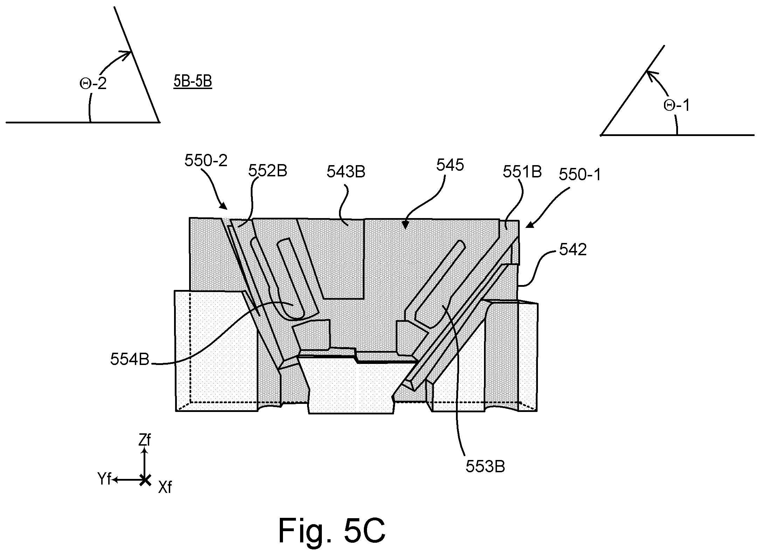

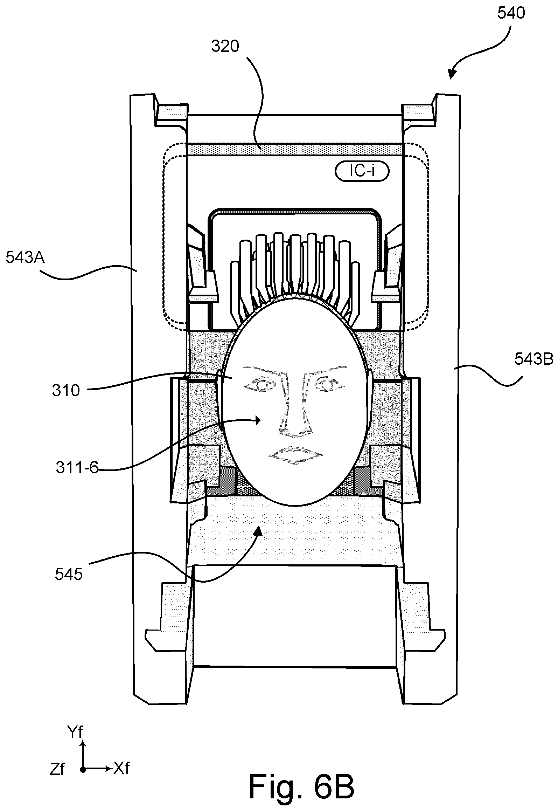

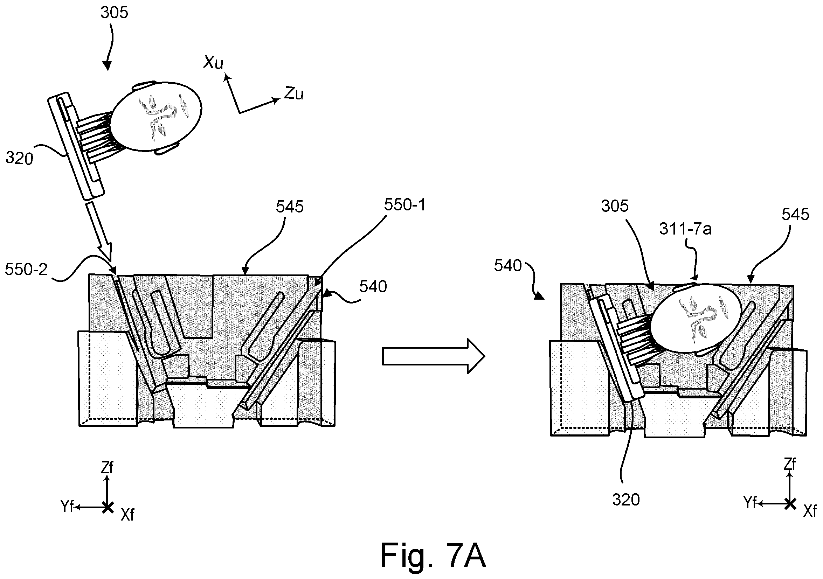

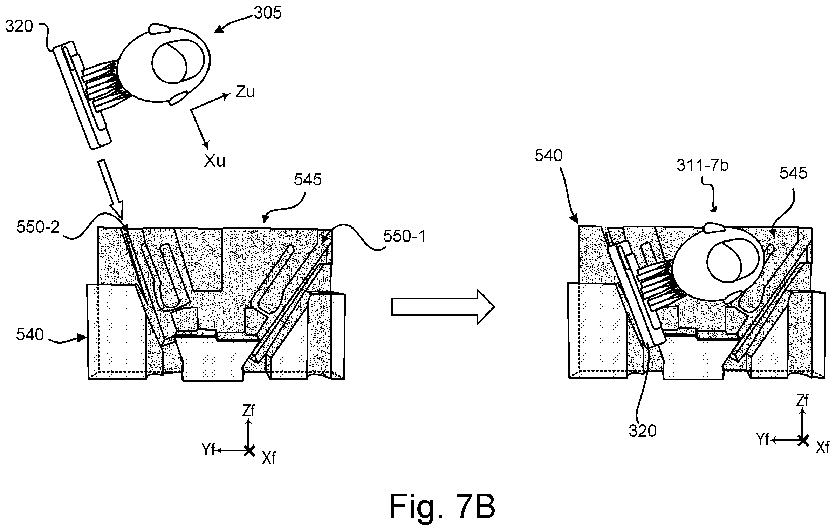

Within the two opposing walls 543A and 543B of the fixture 540, a first plate guide 550-1 and a second plate guide 550-2 are defined. The first plate guide 550-1 and the second plate guide 550-2 are both configured to receive the plate 320 of the unitary object 305 that can be inserted into the cavity 546 of the fixture block 542 by way of the printing opening 545. The first plate guide 550-1 and the second plate guide 550-2 are each defined by two parallel slots within the respective two opposing walls 543A and 543B. In particular, the first plate guide 550-1 is defined by a first slot 551A that is formed within the first wall 543A, and a second slot 551B that is formed within the second wall 543B and is parallel to the first slot 551A. The second plate guide 550-2 is defined by a third slot 552A that is formed within the first wall 543A, and a fourth slot 551B that is formed within the second wall 543B and is parallel to the third slot 551A. As more clearly shown in Fig. 5C, the first plate guide 550-1 and the second plate guide 550-2 can be arranged at different respective angles Θ-1 and Θ-2 relative to the -Yf direction and the +Yf direction, respectively. For example, the angle Θ-1 can be any value between about 50°-60° while the angle Θ-2 can be any value between about 65°-75°. In one specific implementation, the angle Θ-1 is 55° and the angle Θ-2 is 70°. These angles can be chosen to facilitate ink-jet printing certain target regions 111-i of the head 310. For example, the angle Θ-1 can be selected for ink-jet printing of a front target region 311-6 of the head 310, as shown in Figs. 6A and 6B, while the angle Θ-2 can be selected for ink-jet printing of a side target region 311-7 of the head 310, as shown in Figs. 7A and 7B. This is discussed next.

As shown in Figs. 6A and 6B, the plate 320 (of the unitary object 305) can be inserted into the first plate guide 550-1 at the first angle Θ-1 relative to the -Yf direction, or, as shown in Figs. 7A and 7B, the plate 320 can be inserted into the second plate guide 550-2 at the second angle Θ-2 relative to the +Yf direction. The difference in the angles Θ-1 and Θ-2 of the first plate guide 550-1 and the second plate guide 550-2, respectively, therefore permits two different configurations of the head 310 within the printing opening 545 of the fixture block 542, as shown on the right side of Figs. 6A, 7A, and 7B.

In Figs. 6A and 6B, the front target region 311-6 of the head 310 is aligned with the printing opening 545 of the fixture 540. Thus, in this configuration, when the fixture 540 is placed on the base 170, the ink dispenser 190 has access to the front target region 311-6 of the face region 317 for printing. In Fig. 7A, the side target region 311-7a of the head 310 is aligned with the printing opening 545 of the fixture 540. Thus, in the configuration of Fig. 7A, when the fixture 540 is placed on the base 170, the ink dispenser 190 has access to the side target region 311-7a of the face region 317 for printing. On the other hand, in Fig. 7B, the unitary object 305 has been rotated by 180 ° about the Zu axis relative to the unitary object 305 in Fig. 7A. Thus, in Fig. 7B, the side target region 311-7b of the head 310 is aligned with the printing opening 545 of the fixture 540. And, in the configuration of Fig. 7B, when the fixture 540 is placed on the base 170, the ink dispenser 190 has access to the side target region 311-7B of the face region 317 for printing.

The plate guide 550-1 or 550-2 is what determines the registration location because the location of the plate 320, when fixed within the fixture 540, is determined by the plate guide 550-1/550-2. Referring again to Figs. 5A and 5B, the plate guides 550-1 and 550-2 can also include respective biasing devices 553A/B and 554A/B. The biasing device 554A fixes the plate 320 within the slot 552A; the biasing device 554B fixes the plate 320 within the slot 552B, the biasing device 553A fixes the plate 320 within the slot 551A, and the biasing device 553B fixes the plate 320 within the slot 551B.

In some implementations, the plate 320 is a symmetrical shape such as a square shape (see Fig. 3C) such that the plate 320 can be rotated about the Zu axis by 90 degrees relative to the position in Figs. 6A and 6B to obtain the configuration shown in Fig. 7A or rotated about the Zu axis by -90 degrees relative to the position in Figs. 6A and 6B to obtain the configuration shown in Fig. 7B. In this way, each of the target regions 311-6, 311-7a, 311-7b of the head 310 can be aligned with the printing opening 545 of the fixture 540, and when the fixture 540 is placed on the base 170, the ink dispenser 190 has access to each of these target regions for printing.

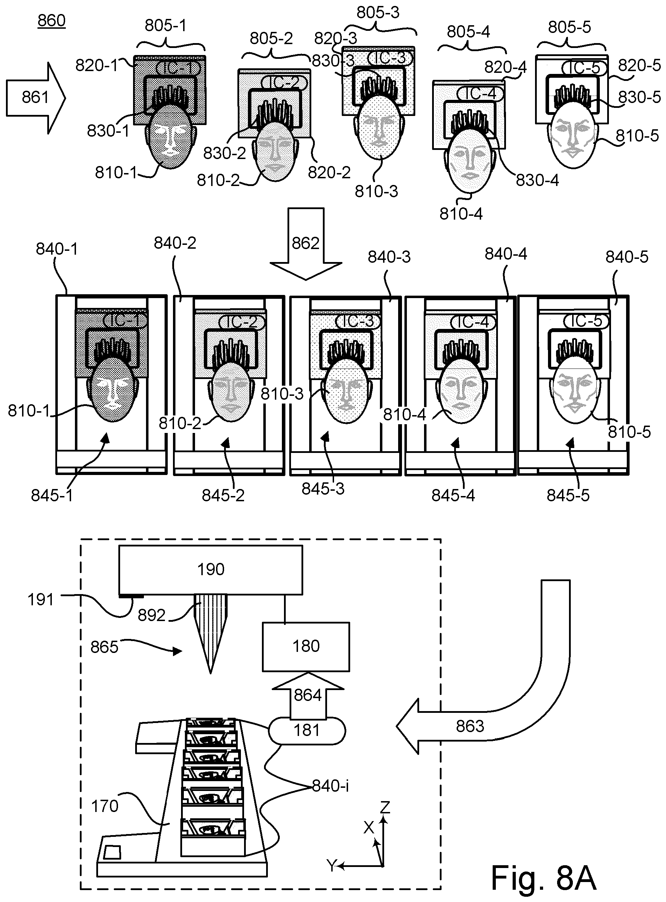

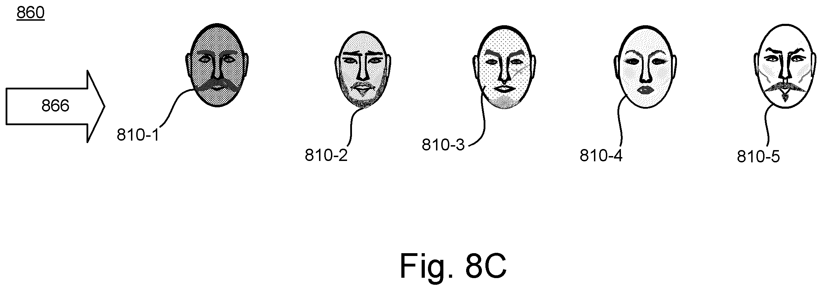

Referring to Figs. 8A-8C, a method 860 is performed for designing a plurality of uniquely-shaped three-dimensional bodies 810-1, 810-2, 810-3, 810-4, 810-5 (written generally as 810-i). While five bodies are shown in the example of Figs. 8A-8C, it is possible for the method 860 to be used to produce fewer than five or more than five bodies. The bodies 810-i can correspond to the bodies 110-i or a plurality of bodies that are each designed generally like the body 310. In this example, the bodies 810-i correspond to heads 310 that have different scales and/or geometries. The method 860 includes forming a plurality of unitary objects 805-1, 805-2, 805-3, 805-4, 805-5 (written generally as 805-i) (861). Each unitary object 805-i includes the respective head 810-i as well as the respective connection mechanism 830-i that attaches the head to a respective plate 820-i. And, because the heads 810-i have different scales and/or geometries, each connection mechanism 830-i is designed with a different scale to accommodate these differences. Five unitary objects 805-1, 805-2, 805-3, 805-4, 805-5 are shown for each corresponding body 810-1, 810-2, 810-3, 810-4, 810-5. But, as noted, more than five or fewer than five unitary objects can be formed depending on how many bodies 810-i are being produced. As discussed above, each unitary object 805-i is associated with a unique identification code IC-i (in this case, IC-1, IC-2, IC-3, IC-4, IC-5). The unitary objects 805-1, 805-2, 805-3, 805-4, 805-5 can be formed by any suitable technique such as by additive manufacturing. One or more materials can be used to form the unitary objects 805-1, 805-2, 805-3, 805-4, 805-5. On the other hand, if a single material is used to form the unitary object 805-1, then all of the regions of the unitary object 805-1 have a uniform color.

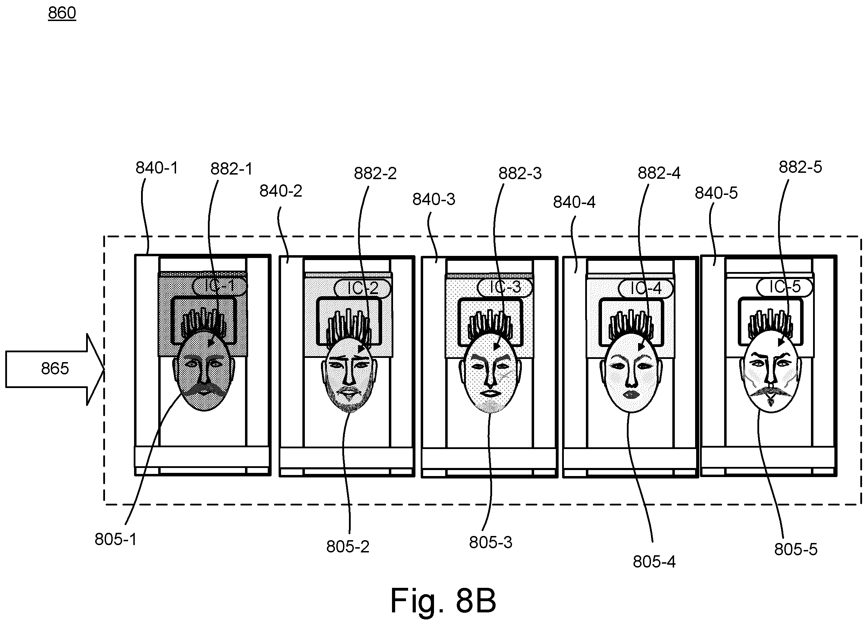

Next, each unitary object 805-1, 805-2, 805-3, 805-4, 805-5 is fixed to a respective fixture 840-1, 840-2, 840-3, 840-4, 840-5 (862). For example, the plate 820-1, 820-2, 820-3, 820-4, 820-5 of each unitary object 805-1, 805-2, 805-3, 805-4, 805-5 is fixed to a plate guide (not shown clearly) defined in the associated fixture 840-1, 840-2, 840-3, 840-4, 840-5 such that a target region of the body (head 810-i) is positioned in a respective printing opening 845-1, 845-2, 845-3, 845-4, 845-5 of the fixture 840-1, 840-2, 840-3, 840-4, 840-5, as discussed above. Next, the fixtures 840-1, 840-2, 840-3, 840-4, 840-5 (collectively referred to as 840-i in Fig. 8A) are arranged on the base 170 (863). The printer controller 180 detects or reads the identification code IC-i of each unitary object 805-1, 805-2, 805-3, 805-4, 805-5 positioned on the base 170 (864). For example, the printer controller 180 can receive the data 181 that includes each of the identification codes IC-1, IC-2, IC-3, IC-4, IC-5 associated with each unitary object 805-1, 805-2, 805-3, 805-4, 805-5. The printer controller 180 instructs the ink dispenser 190 to apply ink or paint 892 to the target region of each head 810-1, 810-2, 810-3, 810-4, 810-5 (865). By applying the ink or paint 892 to each target region of each head 810-1, 810-2, 810-3, 810-4, 810-5 (865), a unique respective topographical design 882-1, 882-2, 882-3, 882-4, 882-5 (collectively referred to as 882-i in Fig. 8B) is created on the target region of each three-dimensional body or head 810-1, 810-2, 810-3, 810-4, 810-5 (associated with each unitary object 805-1, 805-2, 805-3, 805-4, 805-5) positioned in the printing opening 845-1, 845-2, 845-3, 845-4, 845-5 of its respective fixture 840-1, 840-2, 840-3, 840-4, 840-5 (see Fig. 8B). As discussed above, this unique topographical design 882-i is associated with the detected unique and respective identification code IC-i of the unitary object 805-1, 805-2, 805-3, 805-4, 805-5 that includes that three-dimensional body or head.

In Fig. 8B, an example is shown after printing of the unique topographical design 882-i is completed (at step 865) on the target region of each three-dimensional body 810-1, 810-2, 810-3, 810-4, 810-5 associated with a respective unitary object 805-1, 805-2, 805-3, 805-4, 805-5. The unique topographical designs 882-1, 882-2, 882-3, 882-4, 882-5 can be created by the ink or paint 892 that is applied on the surface of the target region of each of the respective heads 810-1, 810-2, 810-3, 810-4, 810-5 associated with each unitary object 805-1, 805-2, 805-3, 805-4, 805-5. The unique topographical design 882-i can include unique colors for specific features on each unitary object 805-1, 805-2, 805-3, 805-4, 805-5 including, for example, eyes, cheeks, brows, lips, beard (if one is present), mustache (if one is present), or scars (if present). Additionally, each respective unique topographical design 882-i can also be different in shape and style and include a plurality of different colors.

**In** the example shown in Fig. 8B, the unique topographical designs 882-1, 882-2, 882-3 and 882-5 printed on the three-dimensional bodies associated with each respective unitary object 805-1, 805-2, 805-3, and 805-5 can have a beard, mustache, or both that are a unique shape, style, and color from one another. For example, the topographical design 882-1 includes a dark brown mustache and the topographical design 882-2 includes a grey beard and mustache with black speckles. The topographical design 882-3 includes a white or gray beard. The topographical design 882-5 includes a yellow and black mustache and a beard patch. Moreover, the unique topographical designs 882-1, 882-2, 882-3, 882-4, 882-5 printed on the three-dimensional bodies associated with each respective unitary object 805-1, 805-2, 805-3, 805-4, 805-5 can each have uniquely shaped and colored brows and different colored eyes. **In** particular, the topographical design 882-1 includes thick brown eye brows and green eyes, the topographical design 882-2 includes thin black brows and dark blue eyes, the topographical design 882-3 includes thick arched blue brows and light brown eyes, the topographical design 882-4 includes arched blonde brows and dark brown eyes, and the topographical design 882-5 includes thin arched black brows and light blue eyes. The topographical design 882-4 also includes red lips. The topographical design 882-2 includes a light mauve cheek color, the topographical design 882-4 includes a medium mauve cheek color, and the topographical design 882-5 includes a light brown check color. The unique topographical design 882-3 printed on the three-dimensional body associated with the unitary object 805-3 also has a scar on its cheek.

The heads 810-1, 810-2, 810-3, 810-4, 810-5 can be made of materials having different colors so that the faces depicted on the bodies 810-1, 810-2, 810-3, 810-4, 810-5 can have different skin tones. For example, the head 810-1 (and the respective unitary object 805-1) is made of a material having the darkest color than the materials used for the other heads, while the head 810-5 (and the respective unitary object 805-5) is made of a material that is lighter than the material of the unitary object 805-1. The unitary object 805-5 is made of a material that has a more yellow hue than the material that is used for the unitary object 805-4. There can be other materials and colors used for the unitary objects 805-1, 805-2, 805-3, 805-4, 805-5 than what are shown. The material and color for a particular unitary object can be selected at step 861 prior to the forming of that unitary object and can be based on the skin color of the person whose face was scanned for reproduction of the face on a head that can be fixed to a toy figure or doll.

Once the printing is completed after step 865, the fixtures 840-1, 840-2, 840-3, 840-4, 840-5 are removed from the base 170 and the respective unitary objects 805-1, 805-2, 805-3, 805-4, 805-5 are removed from their fixtures 840-1, 840-2, 840-3, 840-4, 840-5; then, the head 810-1, 810-2, 810-3, 810-4, 810-5 of each unitary object 805-1, 805-2, 805-3, 805-4, 805-5 is removed from its respective plate 820-1, 820-2, 820-3, 820-4, 820-5 by disconnecting the respective connection mechanism 830-1, 830-2, 830-3, 830-4, 830-5 from the respective head 810-1, 810-2, 810-3, 810-4, 810-5, as shown in Fig. 4B (866).

As discussed above, when the fixtures 840-1, 840-2, 840-3, 840-4, 840-5 are arranged on the base 170 at 863, because of the uniform design of the fixtures 840-1, 840-2, 840-3, 840-4, 840-5 and the design of the connection mechanism 830-1, 830-2, 830-3, 830-4, 830-5 of each unitary object 805-1, 805-2, 805-3, 805-4, 805-5, a registration location for topographical printing on each three-dimensional body (head 810-1, 810-2, 810-3, 810-4, 810-5) is at the same printing plane (XY plane). The printer controller 180 accesses the topographical designs 882-1, 882-2, 882-3, 882-4, 882-5 for each head 810-1, 810-2, 810-3, 810-4, 810-5 such that the instructions sent to the ink dispenser 190 provide a continuous printing process across all of the unitary objects 805-1, 805-2, 805-3, 805-4, 805-5 despite the fact that each of the heads 810-1, 810-2, 810-3, 810-4, 810-5 has a unique shape compared with the other heads 810-1, 810-2, 810-3, 810-4, 810-5 in the plurality of unitary objects 805-i.

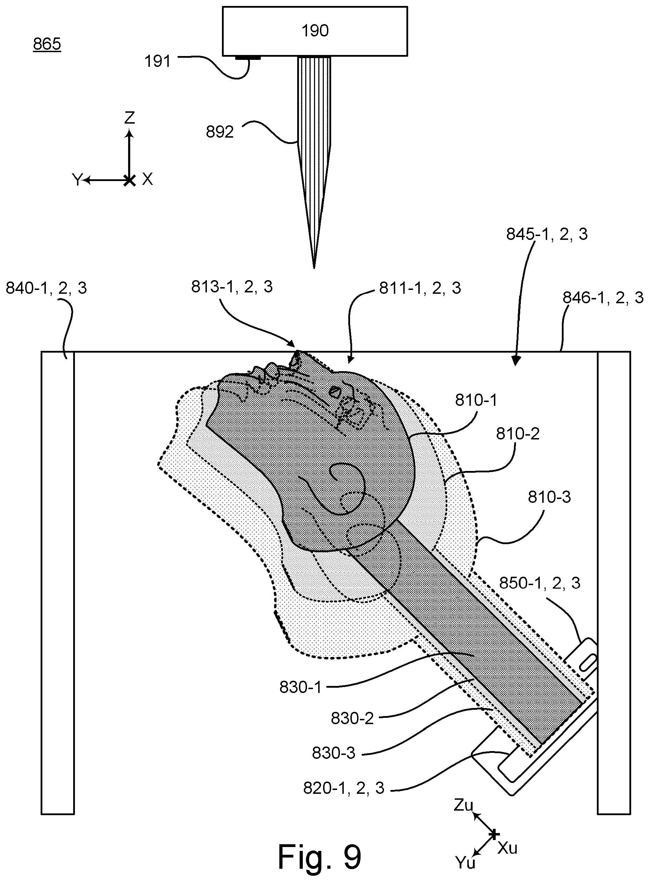

Fig. 9 shows the alignment of three-dimensional bodies (or heads) 810-1, 810-2, 810-3 of the plurality of unitary objects 805-1, 805-2, 805-3. Each of the three-dimensional bodies 810-1, 810-2, 810-3 is connected to the respective plates 820-1, 820-2, 820-3 by the respective connection mechanisms 830-1, 830-2, 830-3. As discussed above, the three-dimensional bodies 810-1, 810-2, 810-3 have different scales and/or geometries. To accommodate the different scales and/or geometries of each three-dimensional body 810-1, 810-2, 810-3, the respective connection mechanisms 830-1, 830-2, 830-3 are made of different scales according to the size of the respective three-dimensional bodies 810-1, 810-2, 810-3 to which they are fixed. The view in Fig. 9 is looking down the X axis and the Z axis is directed up. The heads 810-2 and 810-3 are shown in dashed lines because they are behind the body 810-1 in this view. Only a single plane 846-1, 846-2, 846-3 that defines each printing opening 845-1, 845-2, 845-3 of each of the fixtures 840-1, 840-2, 840-3 is depicted to increase clarity. When the unitary objects 805-1, 805-2, 805-3 are fixed or mounted within in their respective fixtures 840-1, 840-2, 840-3, the plates 820-1, 820-2, 820-3 are fixed to their respective plate guides 850-1, 850-2, 850-3. Looking down the X axis, each of the target regions 811-1, 811-2, 811-3 are aligned with the respective printing openings 845-1, 845-2, 845-3. Moreover, registration areas 813-1, 813-2, 813-3 in each target region 811-1, 811-2, 811-3 are aligned along the X axis as well. The registration areas 813-1, 813-2, 813-3 are the locations in each target region 811-1, 811-2, 811-3 that are aligned such that a localized registration location R-1, R-2, R-3 is the same for all of the target regions 811-1, 811-2, 811-3 and also for the primary registration location R0. In this example, the registration areas 813-1, 813-2, 813-3 in the target regions 811-1, 811-2, 811-3 correspond to the feature (the tip of the nose) that protrudes the most along the Z axis.

The printing system 100 and method 860 enables the topographical printing of a plurality of faces on respective heads, where each face and head has a unique topographical shape, scale, and design. The printing system 100 and method 860 can be useful in an apparatus in which persons have their faces scanned for reproduction on a toy figure or doll. In such an apparatus, each face that is scanned has a unique shape, geometry, and topographical features. In the first step, each three-dimensional head is formed at step 861 as a part of its unitary object. The connection mechanism is adjusted in scale/size to accommodate for the different shapes of the heads. And, the unique shape, geometry, topographical features of the person are associated with the unique identification code IC-i, which is assigned to the person when the person's face and/or head is scanned, and the unitary object formed for that person includes the code IC-i during the entire method 860. In this way, at step 864, the printer controller 180 knows which fixture is associated with which person (because the cod IC-i is read or detected by the printer controller 180) and the instruction to the ink dispenser 190 takes this into account so that the ink dispenser 190 prints the unique topographical design 182-i associated with the IC-i for that particular head.

Other implementations are within the scope of the following claims.

In other implementations, in addition to the plurality of uniquely-designed unitary objects 105-i, there can be identically-designed unitary objects that are printed at the same time as the uniquely-designed unitary objects 105-i on the base 170.

## Claims

1. A fixture (540) comprising:
a fixture block (542) defining a printing opening positioned between two opposing walls (543A, 543B); and
a plurality of plate guides (550-1, 550-2) defined in the walls, wherein each plate guide is defined in a different portion of the fixture block;
wherein each plate guide in the fixture defines a registration location, and, when a plate (320) of a unitary object (305) is fixed to a plate guide, a registration region of a three-dimensional body fixed to the plate is aligned with the registration location of that plate guide.

2. The fixture of claim 1, wherein the registration region of the three-dimensional body that is fixed to the plate depends on which plate guide the plate is fixed to.

3. The fixture of claim 1, wherein each plate guide comprises a slot defined in each of the two opposing walls.

4. The fixture of claim 3, wherein each opposing wall includes a biasing device configured to fix the plate within the slot of that opposing wall.

5. The fixture of claim 1, wherein the fixture is configured to receive unitary objects formed with different shapes, different geometries, and different dimensions.

6. A method of designing a three-dimensional body, the method comprising:
forming a unitary object (305) including the three-dimensional body fixed to a plate (320) by a connection mechanism;
fixing the plate to a plate guide (550-1, 550-2) defined in a fixture block (542) such that a target region of the three-dimensional body is positioned in a printing opening of the fixture block and a registration region of the three-dimensional body is aligned with a registration location within the printing opening that is defined by the plate guide;
detecting a unique identification code (IC-i) of the unitary object;
printing a unique topographical design (182-i) on the target region of the three-dimensional body positioned in the printing opening of the fixture block, the unique topographical design associated with the detected unique identification code; and
when the printing is completed, removing the three-dimensional body from the plate by disconnecting the connection mechanism from the three-dimensional body.

7. The method of claim 6, wherein disconnecting the connection mechanism from the three-dimensional body comprises disconnecting a plurality of posts from the three-dimensional body.

8. A method of designing a plurality of uniquely-shaped three-dimensional bodies, the method comprising:
forming a plurality of unitary objects (305), each unitary object including one of the uniquely-shaped three-dimensional bodies fixed to a plate (320) by a connection mechanism and each unitary object associated with a unique identification code (IC-i);
fixing each unitary object to a respective fixture (540) including fixing the plate of the unitary object to a plate guide (550-1, 550-2) defined in the fixture such that a target region of the three-dimensional body is positioned in a printing opening of the fixture and a registration region of the three-dimensional body is aligned with a registration location within the printing opening that is defined by the plate guide;
arranging the fixtures on a base (170);
detecting the identification code of each unitary object; and
printing a unique topographical design (182-i) on the target region of each three-dimensional body positioned in the printing opening of its respective fixture, the unique topographical design associated with the detected unique identification code of the unitary object that includes that three-dimensional body.

9. The method of claim 8, further comprising, when the printing of the unique topographical design for each three-dimensional body arranged in the fixtures on the base is completed, removing each three-dimensional body from its respective plate by disconnecting the connection mechanism from the three-dimensional body.

10. The method of claim 8, wherein detecting the identification code of each unitary object comprises scanning a visual code on the plate of the unitary object or scanning a visual code on the base.

11. The method of claim 8, wherein arranging the fixtures on the base comprises arranging the fixtures such that the registration locations in the printing openings of the fixture blocks are at the same location relative to an ink dispenser that prints the unique topographical designs.

12. A method comprising:
producing a plurality of unitary objects (305), each unitary object including a three-dimensional body that is fixed to a plate (320) by a connection mechanism, at least two of the unitary objects having distinctly-shaped three-dimensional bodies and associated connection mechanisms that are shaped based on the distinct shapes of the respective three-dimensional bodies;
fixing the unitary objects to respective identical fixtures (540) and arranging the fixtures on a base (170);
printing a topographical design (182-i) on a target region of each three-dimensional body fixed within the fixture arranged on the base;
wherein each registration location for topographical printing on each of the three-dimensional bodies is positioned in the same two-dimensional printing plane when the fixtures are arranged on the base.

13. The method of claim 12, wherein producing the plurality of unitary objects comprises forming the entire unitary object including the three-dimensional body, the connection mechanism, and the plate using an additive manufacturing process.

14. The method of claim 12, wherein the connection mechanism is defined by one or more dimensions that are different based on the distinctly-shaped three-dimensional body to which the connection mechanism is fixed.

15. The method of claim 12, wherein forming the plurality of unitary objects includes forming the at least two distinctly-shaped unitary objects by forming the respective distinctly-shaped three-dimensional bodies with different scales and/or different geometries.

## Patentansprüche

1. Halterung (540), umfassend:
einen Halterungsblock (542), der eine Drucköffnung definiert, die zwischen zwei einander gegenüberliegenden Wänden (543A, 543B) angeordnet ist; und
eine Vielzahl von Plattenführungen (550-1, 550-2), die in den Wänden definiert sind, wobei jede Plattenführung in einem unterschiedlichen Abschnitt des Halterungsblocks definiert ist;
wobei jede Plattenführung in der Halterung eine Registrierposition definiert und, wenn eine Platte (320) eines einstückigen Objekts (305) an einer Plattenführung befestigt ist, ein Registrierbereich eines an der Platte befestigten dreidimensionalen Körpers mit der Registrierposition dieser Plattenführung ausgerichtet ist.

2. Halterung nach Anspruch 1, wobei der Registrierbereich des dreidimensionalen Körpers, der an der Platte befestigt ist, davon abhängt, an welcher Plattenführung die Platte befestigt ist.

3. Halterung nach Anspruch 1, wobei jede Plattenführung einen Schlitz umfasst, der in jeder der zwei einander gegenüberliegenden Wände definiert ist.

4. Halterung nach Anspruch 3, wobei jede gegenüberliegende Wand eine Vorspannvorrichtung einschließt, die dazu ausgebildet ist, die Platte innerhalb des Schlitzes dieser gegenüberliegenden Wand zu befestigen.

5. Halterung nach Anspruch 1, wobei die Halterung dazu ausgebildet ist, einstückige Objekte aufzunehmen, die mit unterschiedlichen Formen, unterschiedlichen Geometrien und unterschiedlichen Abmessungen gebildet sind.

6. Verfahren zum Gestalten eines dreidimensionalen Körpers, wobei das Verfahren Folgendes umfasst:
Bilden eines einstückigen Objekts (305) einschließlich des dreidimensionalen Körpers, der durch einen Verbindungsmechanismus an einer Platte (320) befestigt ist;
Befestigen der Platte an einer Plattenführung (550-1, 550-2), die in einem Halterungsblock (542) definiert ist, derart, dass ein Zielbereich des dreidimensionalen Körpers in einer Drucköffnung des Halterungsblocks angeordnet ist und ein Registrierbereich des dreidimensionalen Körpers mit einer Registrierposition innerhalb der Drucköffnung ausgerichtet ist, die durch die Plattenführung definiert ist;
Detektieren eines eindeutigen Identifikationscodes (IC-i) des einstückigen Objekts;
Drucken eines eindeutigen topographischen Designs (182-i) auf den Zielbereich des dreidimensionalen Körpers, der in der Drucköffnung des Halterungsblocks angeordnet ist, wobei das eindeutige topographische Design dem detektierten eindeutigen Identifikationscode zugeordnet ist; und
wenn das Drucken abgeschlossen ist, Entfernen des dreidimensionalen Körpers von der Platte durch Trennen des Verbindungsmechanismus von dem dreidimensionalen Körper.

7. Verfahren nach Anspruch 6, wobei das Trennen des Verbindungsmechanismus von dem dreidimensionalen Körper das Trennen einer Vielzahl von Stiften von dem dreidimensionalen Körper umfasst.

8. Verfahren zum Gestalten einer Vielzahl von in eindeutiger Weise geformten dreidimensionalen Körpern, wobei das Verfahren Folgendes umfasst:
Bilden einer Vielzahl von einstückigen Objekten (305), wobei jedes einstückige Objekt einen der in eindeutiger Weise geformten dreidimensionalen Körper einschließt, der durch einen Verbindungsmechanismus an einer Platte (320) befestigt ist, und wobei jedes einstückige Objekt einem eindeutigen Identifikationscode (IC-i) zugeordnet ist;
Befestigen jedes einstückigen Objekts an einer jeweiligen Halterung (540), einschließlich Befestigen der Platte des einstückigen Objekts an einer Plattenführung (550-1, 550-2), die in der Halterung definiert ist, derart, dass ein Zielbereich des dreidimensionalen Körpers in einer Drucköffnung der Halterung angeordnet ist und ein Registrierbereich des dreidimensionalen Körpers mit einer Registrierposition innerhalb der Drucköffnung ausgerichtet ist, die durch die Plattenführung definiert ist;
Anordnen der Halterungen auf einer Basis (170);
Detektieren des Identifikationscodes jedes einstückigen Objekts; und
Drucken eines eindeutigen topographischen Designs (182-i) auf den Zielbereich jedes dreidimensionalen Körpers, der in der Drucköffnung seiner jeweiligen Halterung angeordnet ist, wobei das eindeutige topographische Design dem detektierten eindeutigen Identifikationscode des einstückigen Objekts zugeordnet ist, das diesen dreidimensionalen Körper einschließt.

9. Verfahren nach Anspruch 8, weiter umfassend, wenn das Drucken des eindeutigen topographischen Designs für jeden dreidimensionalen Körper, der in den Halterungen auf der Basis angeordnet ist, abgeschlossen ist, Entfernen jedes dreidimensionalen Körpers von seiner jeweiligen Platte durch Trennen des Verbindungsmechanismus von dem dreidimensionalen Körper.

10. Verfahren nach Anspruch 8, wobei das Detektieren des Identifikationscodes jedes einstückigen Objekts das Scannen eines visuellen Codes auf der Platte des einstückigen Objekts oder das Scannen eines visuellen Codes auf der Basis umfasst.

11. Verfahren nach Anspruch 8, wobei das Anordnen der Halterungen auf der Basis das Anordnen der Halterungen umfasst, derart, dass die Registrierpositionen in den Drucköffnungen der Halterungsblöcke an derselben Position relativ zu einem Tintenspender sind, der die eindeutigen topographischen Designs druckt.

12. Verfahren, umfassend:
Herstellen einer Vielzahl von einstückigen Objekten (305), wobei jedes einstückige Objekt einen dreidimensionalen Körper einschließt, der durch einen Verbindungsmechanismus an einer Platte (320) befestigt ist, wobei mindestens zwei der einstückigen Objekte deutlich unterschiedlich geformte dreidimensionale Körper und zugeordnete Verbindungsmechanismen aufweisen, die auf der Grundlage von den unterschiedlichen Formen der jeweiligen dreidimensionalen Körper geformt sind;
Befestigen der einstückigen Objekte an jeweiligen identischen Halterungen (540) und Anordnen der Halterungen auf einer Basis (170);
Drucken eines topographischen Designs (182-i) auf einen Zielbereich jedes dreidimensionalen Körpers, der innerhalb der auf der Basis angeordneten Halterung befestigt ist;
wobei jede Registrierposition zum topographischen Drucken auf jedem der dreidimensionalen Körper in derselben zweidimensionalen Druckebene angeordnet ist, wenn die Halterungen auf der Basis angeordnet sind.

13. Verfahren nach Anspruch 12, wobei das Herstellen der Vielzahl von einstückigen Objekten das Bilden des gesamten einstückigen Objekts einschließlich des dreidimensionalen Körpers, des Verbindungsmechanismus und der Platte unter Verwendung eines additiven Fertigungsprozesses umfasst.

14. Verfahren nach Anspruch 12, wobei der Verbindungsmechanismus durch eine oder mehrere Abmessungen definiert ist, die in Abhängigkeit von dem deutlich unterschiedlich geformten dreidimensionalen Körper, an dem der Verbindungsmechanismus befestigt ist, unterschiedlich sind.

15. Verfahren nach Anspruch 12, wobei das Bilden der Vielzahl von einstückigen Objekten das Bilden der mindestens zwei deutlich unterschiedlich geformten einstückigen Objekte durch Bilden der jeweiligen deutlich unterschiedlich geformten dreidimensionalen Körper mit unterschiedlichen Maßstäben und/oder unterschiedlichen Geometrien einschließt.

## Revendications

1. Dispositif (540) de fixation comprenant :
un bloc (542) de fixation définissant une ouverture d'impression positionnée entre deux parois (543A, 543B) opposées ; et
une pluralité de guides (550-1, 550-2) de plaque définis dans les parois, dans lequel chaque guide de plaque est défini dans une partie différente du bloc de fixation ;
dans lequel chaque guide de plaque dans le dispositif de fixation définit un emplacement d'enregistrement, et, lorsqu'une plaque (320) d'un objet (305) unitaire est fixée à un guide de plaque, une région d'enregistrement d'un corps tridimensionnel fixé à la plaque est alignée avec l'emplacement d'enregistrement de ce guide de plaque.

2. Dispositif de fixation selon la revendication 1, dans lequel la région d'enregistrement du corps tridimensionnel qui est fixé à la plaque dépend du guide de plaque auquel la plaque est fixée.

3. Dispositif de fixation selon la revendication 1, dans lequel chaque guide de plaque comprend une rainure définie dans chacune des deux parois opposées.

4. Dispositif de fixation selon la revendication 3, dans lequel chaque paroi opposée inclut un dispositif de sollicitation configuré pour fixer la plaque à l'intérieur de la rainure de cette paroi opposée.

5. Dispositif de fixation selon la revendication 1, dans lequel le dispositif de fixation est configuré pour recevoir des objets unitaires formés avec des formes différentes, des géométries différentes et des dimensions différentes.

6. Procédé de conception d'un corps tridimensionnel, le procédé comprenant :
la formation d'un objet (305) unitaire incluant le corps tridimensionnel fixé à une plaque (320) par un mécanisme de liaison ;
la fixation de la plaque à un guide (550-1, 550-2) de plaque défini dans un bloc (542) de fixation de telle sorte qu'une région cible du corps tridimensionnel soit positionnée dans une ouverture d'impression du bloc de fixation et qu'une région d'enregistrement du corps tridimensionnel soit alignée avec un emplacement d'enregistrement à l'intérieur de l'ouverture d'impression qui est défini par le guide de plaque ;
la détection d'un code d'identification unique (IC-i) de l'objet unitaire ;
l'impression d'un motif (182-i) topographique unique sur la région cible du corps tridimensionnel positionnée dans l'ouverture d'impression du bloc de fixation, le motif topographique unique étant associé au code d'identification unique détecté ; et
lorsque l'impression est terminée, le retrait du corps tridimensionnel de la plaque par déconnexion du mécanisme de liaison du corps tridimensionnel.

7. Procédé selon la revendication 6, dans lequel la déconnexion du mécanisme de liaison du corps tridimensionnel comprend la déconnexion d'une pluralité de tiges du corps tridimensionnel.

8. Procédé de conception d'une pluralité de corps tridimensionnels de forme unique, le procédé comprenant :
la formation d'une pluralité d'objets (305) unitaires, chaque objet unitaire incluant l'un des corps tridimensionnels de forme unique fixé à une plaque (320) par un mécanisme de liaison et chaque objet unitaire étant associé à un code d'identification unique (IC-i) ;
la fixation de chaque objet unitaire à un dispositif (540) de fixation respectif, incluant la fixation de la plaque de l'objet unitaire à un guide (550-1, 550-2) de plaque défini dans le dispositif de fixation de telle sorte qu'une région cible du corps tridimensionnel soit positionnée dans une ouverture d'impression du dispositif de fixation et qu'une région d'enregistrement du corps tridimensionnel soit alignée avec un emplacement d'enregistrement à l'intérieur de l'ouverture d'impression qui est défini par le guide de plaque ;
l'agencement des dispositifs de fixation sur une base (170) ;
la détection du code d'identification de chaque objet unitaire ; et
l'impression d'un motif (182-i) topographique unique sur la région cible de chaque corps tridimensionnel positionnée dans l'ouverture d'impression de son dispositif de fixation respectif, le motif topographique unique étant associé au code d'identification unique détecté de l'objet unitaire qui inclut ce corps tridimensionnel.

9. Procédé selon la revendication 8, comprenant en outre, lorsque l'impression du motif topographique unique pour chaque corps tridimensionnel agencé dans les dispositifs de fixation sur la base est terminée, le retrait de chaque corps tridimensionnel de sa plaque respective par déconnexion du mécanisme de liaison du corps tridimensionnel.

10. Procédé selon la revendication 8, dans lequel la détection du code d'identification de chaque objet unitaire comprend le balayage d'un code visuel sur la plaque de l'objet unitaire ou le balayage d'un code visuel sur la base.

11. Procédé selon la revendication 8, dans lequel l'agencement des dispositifs de fixation sur la base comprend l'agencement des dispositifs de fixation de telle sorte que les emplacements d'enregistrement dans les ouvertures d'impression des blocs de fixation soient au même emplacement par rapport à un distributeur d'encre qui imprime les motifs topographiques uniques.

12. Procédé comprenant :
la production d'une pluralité d'objets (305) unitaires, chaque objet unitaire incluant un corps tridimensionnel qui est fixé à une plaque (320) par un mécanisme de liaison, au moins deux des objets unitaires présentant des corps tridimensionnels de forme distincte et des mécanismes de liaison associés dont la forme est fonction des formes distinctes des corps tridimensionnels respectifs ;
la fixation des objets unitaires à des dispositifs (540) de fixation identiques respectifs et l'agencement des dispositifs de fixation sur une base (170) ;
l'impression d'un motif (182-i) topographique sur une région cible de chaque corps tridimensionnel fixé à l'intérieur du dispositif de fixation agencé sur la base ;
dans lequel chaque emplacement d'enregistrement pour une impression topographique sur chacun des corps tridimensionnels est positionné dans le même plan d'impression bidimensionnel lorsque les dispositifs de fixation sont agencés sur la base.

13. Procédé selon la revendication 12, dans lequel la production de la pluralité d'objets unitaires comprend la formation de l'objet unitaire entier incluant le corps tridimensionnel, le mécanisme de liaison, et la plaque en utilisant un processus de fabrication additive.

14. Procédé selon la revendication 12, dans lequel le mécanisme de liaison est défini par une ou plusieurs dimensions qui sont différentes en fonction du corps tridimensionnel de forme distincte auquel le mécanisme de liaison est fixé.

15. Procédé selon la revendication 12, dans lequel la formation de la pluralité d'objets unitaires inclut la formation des au moins deux objets unitaires de forme distincte par formation des corps tridimensionnels de forme distincte respectifs avec des échelles différentes et/ou des géométries différentes.
